# EUROPÄISCHE PATENTSCHRIFT

(11) **EP 2 313 592 B1**
(45) Veröffentlichungstag und Bekanntmachung des Hinweises auf die Patenterteilung: **27.05.2015**
(21) Anmeldenummer: 09780266.4
(22) Anmeldetag: 07.07.2009
(51) Int. Cl.: E06B 3/30, F16S 3/00, B44C 5/00, B27D 1/00, B32B 21/08

(54) **PROFILIERTER GEGENSTAND MIT DECKMATERIAL UND VERSIEGELUNGSSCHICHT**
PROFILED OBJECT WITH A PROTECTIVE MATERIAL AND SEALING LAYER
ARTICLE PROFILÉ COMPORTANT UN MATÉRIAU DE COUVERTURE ET UNE COUCHE DE SCELLEMENT

(30) Priorität: 07.07.2008 DE 202008009137 U
(43) Veröffentlichungstag der Anmeldung: 27.04.2011
(73) Patentinhaber: Klebchemie M.G. Becker GmbH & Co. KG, 76356 Weingarten/Baden (DE)
(72) Erfinder: BECKER-WEIMANN, Klaus, 76227 Karlsruhe (DE); FANDREY, Jens, 75180 Pforzheim (DE)
(74) Vertreter: Büchel, Edwin
(86) Internationale Anmeldenummer: PCT/EP2009/058614
(87) Internationale Veröffentlichungsnummer: WO 2010/003959

(56) Entgegenhaltungen:
- WO-A2-02/094549
- DE-A1- 3 026 818
- DE-A1- 3 512 622
- FR-A1- 2 652 539

## Beschreibung

Die vorliegende Erfindung betrifft einen profilierten Gegenstand, enthaltend einen Profilbereich mit profilierter Oberfläche mit Deckmaterial und Versiegelungsschicht.

Profilierte Gegenstände sollen häufig mit einem Deckmaterial versehen werden. Hierbei kann es sich bei dem Deckmaterial um ein Furnier handeln.

Furniere werden insbesondere in großem Maß in der möbel- und holzverarbeitenden Industrie eingesetzt, wie sie im Bereich der Ummantelung, etwa für Wandanschlussleisten, in der Flächenkaschierung, für Möbelflächen, Dielen, Tische usw. oder in der Schmalflächenbeschichtung bzw. Kantenverklebung, etwa für Geradkanten, Softforming oder Postforming bei Tischplatten, Möbeltüren oder dergleichen. Dazu wird zunächst das Furnier selbst hergestellt, beispielsweise durch Abschälen von einem Massivholzstück. Die großflächigen Furnierplatten werden dann entweder zwischengelagert, beispielsweise zu einer Furnierrolle aufgewickelt, oder umgehend weiterverarbeitet. Bei der Weiterverarbeitung der Furniere zur Herstellung von furnierten Teilen wird das Furnier auf den Holz- oder Holzwerkträger aufgeklebt und anschließend das Halbfertigteil geschliffen und lackiert oder direkt lackiert.

Der Lackiervorgang ist aufwendig, da nicht nur gerade Flächen, sondern auch Profilgeometrien des furnierummantelten Profils lackiert werden müssen. Die Profile können dabei im Softforming-Verfahren auf einer Kantenanleimmaschine, im Postforming-Verfahren oder auf andere Weise mit dem Furnier beklebt sein. Die beim Lackieren eingesetzten Lacke müssen in der Regel mehrschichtig aufgetragen werden, was eine aufwendige Verfahrenstechnologie und entsprechenden Platzbedarf erfordert.

Ein weit verbreitetes Lacksystem sind UV-härtende Lacke, die meist per Walzenauftrag, seltener im Sprühauftrag, auf die Teile aufgetragen werden. Der anschließende Aushärtevorgang erfolgt mit UV-Licht bzw. UV-Lampen.

Der maschinelle Aufwand bei der Lackierung mit UV-Lacken ist sehr hoch und erfordert einen sehr großen Raumbedarf. Der große Raumbedarf ist auch darin begründet, dass Lackiervorgänge mit UV-härtenden Systemen meist mehrere Aufträge - in der Praxis sind drei bis vier Aufträge gängig - erfordern. Mit jedem Lackauftrag können aufgrund der Viskosität, speziell aber aufgrund der UV-Durchhärtung nur ca. 10 bis 20 µm dicke Schichten appliziert werden, weshalb auch mehrere Lackaufträge notwendig sind. UV-Lampen und die notwendige Energie zur Aushärtung sind sehr teuer.

Um diese Nachteile zu vermeiden, wird in der WO-A 02/094549 ein Verfahren sowie eine Vorrichtung zur Herstellung von Furnieren und von furnierten Teilen sowie Furniere und furnierte Teile vorgeschlagen, wobei die ein- oder mehrlagigen Furniere zunächst auf an sich bekannte Weise hergestellt werden und anschließend vor der Weiterverarbeitung eine Versiegelungsschicht aufgebracht wird.

Bislang bestand jedoch im Stand der Technik das Vorurteil, dass stark profilierte Gegenstände, wie beispielsweise ein Fensterprofil einer Deckmaterialveredelung durch beispielsweise ein bereits lackiertes Holzfurnier nicht möglich sei, da aufgrund der starken Profilierung (und damit kleinen Profilradien) bei der Verarbeitung die Gefahr besteht, dass Weißbruch auftritt. Vielmehr wurden solche Geometrien eines beispielsweise PVC- oder Aluminiumprofils durch die extrem hohen Kosten für ein Extrusionswerkzeug quasi festgelegt, und es schien daher aus wirtschaftlichen Gründen nicht möglich, dieses "ummantelungsfreundlich" anzupassen. Dadurch schien es technisch aussichtslos, solche Profile mit bereits oberflächenfertigem Echtholz zu ummanteln, ohne dass Nachbehandlungsschritte, wie Schleifen oder dergleichen, erforderlich wären. Ähnliches gilt für andere Deckmaterialien, wie Papiere oder Folien.

Eine Aufgabe der vorliegenden Erfindung besteht somit darin, entsprechend profilierte Gegenstände mit versiegeltem Deckmaterial bereitzustellen.

Diese Aufgabe wird gelöst durch einen profilierten Gegenstand, enthaltend einen Profilbereich mit profilierter Oberfläche, wobei auf der profilierten Oberfläche ein Deckmaterial aufgebracht ist, das auf dessen der profilierten Oberfläche abgewandten Fläche eine Versiegelungsschicht aus einer Reaktivschmelzmasse aufweist, dadurch gekennzeichnet, dass der Profilbereich eine Profilgeometrie mit mehreren Profilradien umfasst, wobei mindestens ein Profilradius kleiner als 3 mm ist und das Deckmaterial eine Dicke von höchstens 200 bis 400µm aufweist.

Es stellte sich nämlich überraschend heraus, dass stark profilierte Gegenstände auch in Ihrem Profilbereich mit einem Deckmaterial versehen werden können, sofern dieses bereits eine Versiegelungsschicht aufweist.

Durch die Versiegelungsschicht ist eine Schutzfunktion erfüllt, die beispielsweise im Hinblick auf Flexibilität, Resistenz gegenüber Temperatureinflüssen, wasserabweisende Eigenschaften, geringe Versprödung gegenüber UV-Strahlung für den profilierten Gegenstand gegeben ist.

Dadurch wird auch ein Einsatz im Außenbereich ermöglicht.

Das Aufbringen der Versiegelungsschicht auf das Deckmaterial ist in WO-A 02/094549 näher beschrieben.

Bei dem profilierten Gegenstand kann es sich beispielsweise um ein Bauteil für den Innen- oder Außenbereich, insbesondere um ein Fenster- oder Türelement oder ein profiliertes Fußbodenpaneel, um ein Möbelstück oder ein Kraftfahrzeugteil handeln. Besonders bevorzugt handelt es sich bei dem profilierten Gegenstand um ein Fensterelement.

Grundsätzlich kann der profilierte Gegenstand aus einem beliebigen Material bestehen. Es ist jedoch vorteilhaft, dass zumindest im Profilbereich der Gegenstand aus Holz, Kunststoff oder Metall besteht, oder zumindest eines dieser Materialien enthalten ist.

Bevorzugt besteht der profilierte Gegenstand zumindest im Profilbereich aus Kunststoff oder Aluminium.

Bei dem Kunststoff handelt es sich weiterhin vorzugsweise um einen Polyvinylchlorid-Kunststoff (um ein PVC), insbesondere um extrudiertes PVC.

Das Deckmaterial weist eine Dicke von höchstens 200 bis 400 µm auf. Bei dem Deckmaterial handelt es sich vorzugsweise um ein ein- oder mehrlagiges Holzfurnier, insbesondere um ein Echtholzfurnier, eine Papierlage, wobei das Papier vorzugsweise ein Dekopapier ist, welches bedruckt oder unbedruckt sein kann, und der Druck - sofern vorhanden - digital, mit Hilfe eines Inkjets oder auf andere Weise hergestellt sein kann. Darüber hinaus kann es sich um eine Kunststofffolie handeln. Besonders bevorzugt handelt es sich um ein ein- oder mehrlagiges Holzfurnier, insbesondere um ein Echtholzfurnier. Bei der Versiegelungsschicht handelt es sich um eine Reaktiv-Schmelzmasse, die sich insbesondere dadurch auszeichnet, dass sie wasser- und lösemittelfrei ist und mit der Luftfeuchtigkeit aushärtet.

Die Schmelzmasse basiert hierbei vorzugsweise auf Polyurethan.

Die wasser- und lösemittelfreie Reaktiv-Schmelzmasse-Schicht (Versiegelungsschicht) kann auf die zu versiegelnde Fläche bei einer Temperatur ab 100 °C, etwa 100 °C bis 140 °C, aufgebracht werden. Dabei werden beispielsweise pro Quadratmeter zu beschichtender Oberfläche etwa 50 bis 100 g Reaktiv-Schmelzmasse aufgetragen. Die Reaktiv-Schmelzmasse besitzt üblicherweise eine Dichte von ca. 1,1 g/m² und eine Viskosität nach Brookfield bei 120 °C von ca. 4000 mPas. Es sind jedoch auch wesentlich höhere Viskositäten der Reaktiv-Schmelzmasse-Schicht bis zu etwa 30.000 mPas denkbar. Günstig ist es, die Reaktiv-Schmelzmasse-Schicht unter Luftabschluss und Abschirmung von Luftfeuchtigkeit aufzubringen, um ein vorzeitiges Ausreagieren zu verhindern. Die Schicht kann beispielsweise aufgerakelt, aufgewalzt, aufgesprüht oder mittels einer Düse oder Schlitzdüse aufgebracht werden. Selbst im ausgehärteten Zustand als 100-prozentiger Feststoff weist die Reaktiv-Schmelzmasse-Schicht noch eine gewisse Restelastizität auf. Eine Reaktiv-Schmelzmasse-Schicht hat sich gerade für die Beschichtung von Furnieren als vorteilhaft erwiesen, weil sie in einem einzigen Auftrag auf die Oberfläche des Furniers aufgetragen werden kann. Die verbleibende Restelastizität der Versiegelungsschicht ermöglicht die späteren Verklebungsprozesse auch um Profilgeometrien, die Profilradien aufweisen, welche kleiner als 3 mm sind.

Der Begriff "Profilradius" ist dem Fachmann bekannt. Häufig werden herstellerseitig die Profilradien der profilierten Gegenstände angegeben. Hierbei wird der Radius mit dem Großbuchstaben R vor der Maßzahl gemäß DIN 406-11 (12.92) gekennzeichnet.

Es können vorzugsweise sogar stark profilierte Gegenstände mit einem Deckmaterial versehen werden, bei dem der mindestens eine Profilradius kleiner als 1 mm ist.

Die Versiegelungsschicht bewirkt eine zusätzliche Stabilisierung der Furnieroberfläche, die Risse in der Oberfläche verhindert.

Ähnliches gilt bei anderen Deckmaterialien.

Über diese Vorteile hinaus weist die Reaktiv-Schmelzmasse-Schicht eine hohe UV-Stabilität, eine hohe Härte, Kratzfestigkeit und eine sehr hohe Stoßfestigkeit auf. Die Verarbeitung der Reaktiv-Schmelzmasse-Schicht erfordert im Vergleich zu herkömmlichen Lackieranlagen nur geringe Maschineninvestitionen und geringen Platz. Die Beschichtung der Reaktiv-Schmelzmasse stellt eine einfache Heiß-Kalt-Reaktion mit anschließendem Vernetzungsprozess mit Hilfe von Feuchtigkeit aus der Luft oder dem Material dar, ohne dass eine UV- oder Elektronenstrahlhärtung oder dergleichen notwendig wäre.

Eine Verbesserung der Oberflächeneigenschaften der Reaktiv-Schmelzmasse-Schicht kann dadurch erzielt werden, dass nach dem Aufbringen auf die Oberfläche des Deckmaterials die Reaktiv-Schmelzmasse-Schicht geglättet wird. Dadurch werden Unebenheiten der Oberfläche vermieden, die sich durch den bloßen Auftrag der heißen Reaktiv-Schmelzmasse ergeben können, und es ergibt sich eine noch glättere Oberfläche. Es ist dann auch möglich, mit geringeren Materialmengen zwischen 50 und 100 g/m² an Reaktiv-Schmelzmasse zu arbeiten.

Eine bevorzugte Ausführungsform der vorliegenden Erfindung liegt somit in einem Gegenstand, der eine Versiegelungsschicht enthält, die auf ihrer Oberfläche geglättet ist.

Die Versiegelungsschicht hat vorzugsweise eine maximale Dicke von 20 µm bis 70 µm.

Vorteilhaft ist es, der Oberfläche der Reaktiv-Schmelzmasse-Schicht zwischen dem Aufbringen und dem Glätten noch einmal Wärme zuzuführen, um das Ergebnis der Glättung weiterzuverbessern. Günstigerweise erfolgt das Glätten mittels einer Walze, beispielsweise einer Stahlwalze, die gegebenenfalls mit einer Polyurethan-Beschichtung versehen sein kann.

Die Beschichtung des Deckmaterials durch die Versiegelungsschicht kann somit mittels Walze erfolgen, die gegebenenfalls mit einem Trennmittel benetzt wird. Einzelheiten zu geeigneten Trennmitteln, zu Vorrichtungen zur Herstellung von Furnieren mit einer Versiegelungsschicht ist in WO-A 02/094549 näher beschrieben und kann auch bei Deckmaterialien, welche keine Furniere sind analog durchgeführt werden.

Das Aufbringen des mit der Versiegelungsschicht versehenen Deckmaterials auf dem profilierten Gegenstand geschieht durch an sich im Stand der Technik bekannte Methoden, die analog zur Folienkaschierung eingesetzt werden können.

## Patentansprüche

1. Profilierter Gegenstand enthaltend einen Profilbereich mit profilierter Oberfläche, wobei auf der profilierten Oberfläche ein Deckmaterial aufgebracht ist, das auf dessen der profilierten Oberfläche abgewandten Fläche eine Versiegelungsschicht aus einer Reaktiv-Schmelzmasse aufweist, wobei der Profilbereich eine Profilgeometrie mit mehreren Profilradien umfasst, **dadurch gekennzeichnet, dass** mindestens ein Profilradius kleiner als 3 mm ist und das Deckmaterial eine Dicke von höchstens 200 bis 400 µm aufweist.

2. Gegenstand nach Anspruch 1, **dadurch gekennzeichnet, dass** der profilierte Gegenstand ein Bauteil für den Innen oder Außenbereich, ein Möbelstück oder ein Kraftfahrzeugteil ist.

3. Gegenstand nach Anspruch 2, **dadurch gekennzeichnet, dass** das Bauteil ein Fenster- oder Türelement oder ein profiliertes Fußbodenpaneel ist.

4. Gegenstand nach Anspruch 3, **dadurch gekennzeichnet, dass** das Bauteil ein Fensterelement ist.

5. Gegenstand nach einem der Ansprüche 1 bis 4, **dadurch gekennzeichnet, dass** der profilierte Gegenstand zumindest im Profilbereich aus Holz, Kunststoff oder Metall besteht oder zumindest mindestens eines dieser Materialien enthält.

6. Gegenstand nach Anspruch 5, **dadurch gekennzeichnet, dass** der profilierte Gegenstand zumindest im Profilbereich aus Kunststoff oder Aluminium besteht.

7. Gegenstand nach Anspruch 6, **dadurch gekennzeichnet, dass** der Kunststoff ein PVC ist.

8. Gegenstand nach einem der Ansprüche 1 bis 9, **dadurch gekennzeichnet, dass** das Deckmaterial ein ein- oder mehrlagiges Holzfurnier, eine Papierlage oder eine Kunststoffolie ist.

9. Gegenstand nach Anspruch 8, **dadurch gekennzeichnet, dass** das Holzfurnier ein Echtholzfurnier ist.

10. Gegenstand nach Anspruch 8, **dadurch gekennzeichnet, dass** das Papier ein Dekopapier ist.

11. Gegenstand nach einem der Ansprüche 1 bis 10, **dadurch gekennzeichnet, dass** die Reaktiv-Schmelzmasse auf Polyurethan basiert.

12. Gegenstand nach einem der Ansprüche 1 bis 11, **dadurch gekennzeichnet, dass** die Versiegelungsschicht auf ihrer Oberfläche geglättet ist.

13. Gegenstand nach einem der Ansprüche 1 bis 12, **dadurch gekennzeichnet, dass** die Versiegelungsschicht eine maximale Dicke von 20 µm bis 70 µm aufweist.

14. Gegenstand nach einem der Ansprüche 1 bis 13, **dadurch gekennzeichnet, dass** der mindestens eine Profilradius kleiner als 1 mm ist.

## Claims

1. A profiled article comprising a profile region with profiled surface, where a covering material has been applied on the profiled surface, and that area of the covering material that faces away from the profiled surface has a sealing layer made of a reactive melt, wherein the profile region comprises a profile geometry with several profile radii, **characterized in that** at least one profile radius is smaller than 3 mm and the covering material has a thickness of at most 200 to 400 µm.

2. The article as claimed in claim 1, **characterized in that** the profiled article is a component for the indoor or outdoor sector, an item of furniture, or a part of a motor vehicle.

3. The article as claimed in claim 2, **characterized in that** the component is a window element or door element, or a profiled floor panel.

4. The article as claimed in claim 3, **characterized in that** the component is a window element.

5. The article as claimed in any of claims 1 to 4, **characterized in that** the profiled article is composed, at least in the profile region, of wood, plastic, or metal, or at least comprises at least one of said materials.

6. The article as claimed in claim 5, **characterized in that** the profiled article is composed, at least in the profile region, of plastic or aluminum.

7. The article as claimed in claim 6, **characterized in that** the plastic is a PVC.

8. The article as claimed in any of claims 1 to 7, **characterized in that** the covering material is a single- or multilayer wood veneer, a paper layer, or a plastics foil.

9. The article as claimed in claim 8, **characterized in that** the wood veneer is a genuine wood veneer.

10. The article as claimed in claim 8, **characterized in that** the paper is a decorative paper.

11. The article as claimed any of claims 1 to 10, **characterized in that** the reactive melt is polyurethane-based.

12. The article as claimed in any of claims 1 to 11, **characterized in that** the sealing layer has been surfaced-smoothed.

13. The article as claimed in any of claims 1 to 12, **characterized in that** the maximum thickness of the sealing layer is 20 µm to 70 µm.

14. The article as claimed in any of claims 1 to 13, **characterized in that** the at least one profile radius is smaller than 1 mm.

## Revendications

1. Article profilé comportant une zone profilée avec une surface profilée, dans lequel un matériau de couverture est déposé sur la surface profilée et présente, sur sa face située à l'opposé de la surface profilée, une couche d'enduisage en une masse fondue réactive, dans lequel la zone profilée comprend une géométrie de profil avec plusieurs rayons de profil, **caractérisé en ce qu'**au moins un rayon de profil est inférieur à 3 mm et le matériau de couverture présente une épaisseur de 200 à 400 µm au maximum.

2. Article selon la revendication 1, **caractérisé en ce que** l'article profilé est un élément de construction pour l'intérieur ou l'extérieur, une pièce de meuble ou une partie de véhicule automobile.

3. Article selon la revendication 2, **caractérisé en ce que** l'élément de construction est un élément de fenêtre ou de porte ou un panneau de parquet profilé.

4. Article selon la revendication 3, **caractérisé en ce que** l'élément de construction est un élément de fenêtre.

5. Article selon l'une quelconque des revendications 1 à 4, **caractérisé en ce que** l'article profilé se compose, au moins dans la zone profilée, de bois, de matière plastique ou de métal, ou au moins contient au moins un de ces matériaux.

6. Article selon la revendication 5, **caractérisé en ce que** l'article profilé se compose, au moins dans la zone profilée, de matière plastique ou d'aluminium.

7. Article selon la revendication 6, **caractérisé en ce que** la matière plastique est un PVC.

8. Article selon l'une quelconque des revendications 1 à 7, **caractérisé en ce que** le matériau de couverture est un placage de bois en une ou plusieurs couches, une couche de papier ou une feuille de matière plastique.

9. Article selon la revendication 8, **caractérisé en ce que** le placage de bois est un placage de bois massif.

10. Article selon la revendication 8, **caractérisé en ce que** le papier est un papier décoratif.

11. Article selon l'une quelconque des revendications 1 à 10, **caractérisé en ce que** la masse fondue réactive est à base de polyuréthane.

12. Article selon l'une quelconque des revendications 1 à 11, **caractérisé en ce que** la couche d'enduisage est lissée sur sa surface.

13. Article selon l'une quelconque des revendications 1 à 12, **caractérisé en ce que** la couche d'enduisage présente une épaisseur maximale de 20 µm à 70 µm.

14. Article selon l'une quelconque des revendications 1 à 13, **caractérisé en ce que** ledit au moins un rayon de profil est inférieur à 1 mm.
